# EUROPEAN PATENT APPLICATION

(11) **EP 0 995 563 A1**
(43) Date of publication of application: **26.04.2000**
(21) Application number: 98119427.7
(22) Date of filing: 15.10.1998
(51) Int. Cl.: B28B 13/02

(54) **A plant and process for forming ceramic products, such as tiles and the like, by powder pressing**

(71) Applicant: Ronflette S.A., 2233 Luxembourg (LU)
(72) Inventor: Stefani, Franco, 41049 Sassuolo (MO) (IT); Gozzi, Franco, 41043 Formigine (MO) (IT)
(74) Representative: Gotra, Stefano

(57) **Abstract**

The plant and process for forming ceramic products such as tiles and the like by pressing powders comprises: a continuous forming line comprising a mobile transport plane for supporting powders to be pressed and the material formed by a pressing operation; a press-forming device (1) which is crossed by said mobile transport plane which plane also functions as a bottom surface of the press-forming device (1); said press-forming device (1) comprising: a lower body (2) bearing a support surface (20) predisposed in such a way that said mobile transport plane can run and rest thereon; an upper body (3) provided with at least an active surface (30) predisposed facing said support surface (20); at least one shaping frame (4) predisposed so as to delimit perimetrally said at least one active surface (30) and so as to be mobile with respect to said upper body (3) in order to be able to project inferiorly from said at least one active surface (30); said lower body (2) and said upper body (3) being reciprocally mobile on command in a perpendicular direction with respect to the support surface (20) and to said at least one active surface (30); wherein upstream of the press-forming device (1), a portion of said mobile transport plane functions as a support for formation and preparation of loads or layers of powders to be pressed, and a portion of said mobile transport plane line downstream of the press-forming device (1) functions as a line for transport and evacuation of press-formed material and any residues of powders.

## Description

The prior art in the field of forming ceramic tiles is based on the use of dies inserted into presses. The dies are, schematically speaking, constituted by a cavity into which powders are deposited, and by at least one punch having the task of pressing the deposited powders.

The cavity is geometrically designed according to the form and shape of the tile to be produced. It is afforded in the bottom die and at each pressing cycle must be filled with the correct quantity of powder. The batching of the powders is performed by a special device such as a loading hopper, which exists in many forms but always has the characteristic of having to be introduced into the open die, precisely between the bottom die containing the cavity and the top die or punch. To perform its task efficiently the loading hopper has to make an outward and return motion into the open bottom die, which takes a not inconsiderable time within the context of the whole press-forming cycle. This time consumption becomes particularly relevant when, as happens ever more frequently, double-loading hoppers are used to deposit at least two distinct layers of powder separately, one on top of the other, in the cavity. The consequent lengthening of press-forming cycle time has the immediate negative consequence that the whole plant production rate drops.

A further negative aspect of the prior-art realisations is attributable to an inherent and considerable constructional complexity, especially in multiple batching, in the overall functionality of the whole plant.

All of the preceding leads to a series of constraints on the whole tile production technology, which imposes, in effect, an obligation to carry out some operations, prevalently decoration operations, on a tile support which has already been press-formed. This creates further problems, often not easily resolvable, not the least of which is the need to create work lines for pressed and formed tiles waiting for a subsequent decoration operation.

Such lines are known in the prior art, for example where lines of perfectly formed supports are held in line to receive dry powder or granular glazes whose adhesion to the support is stabilised during the firing phase immediately subsequent to the deposit of the powders themselves.

Another known technology is that of the decoration of ceramic tiles founded principally on the application of liquid glazes on a clay support (or the like), preformed and pre-dried.

In the above case, for the production of a single-fired tile or vitrified stoneware, the complete production cycle includes the following work phases: preparation of the raw materials; press-forming; drying; glazing (wet); firing; selection; storing.

The above-described prior art necessarily involves the use of a dryer (which makes the support consistent enough to be manipulated and decorated on the glazing lines) with a consequently considerable energy expenditure, and the adoption of appropriate glazing lines which, among other things, occupy a large space on the factory floor.

The above are apparently unresolvable drawbacks in the prior art.

The main aim of the present invention is to obviate the above-described limits in the prior art by providing a new plant for producing decorated ceramic tiles in which even elaborate decorations can be achieved without having to include work operations subsequent to forming and, consequently, without any need for special decoration lines or equipment.

The invention also aims greatly to simplify the whole tile-forming operation, freeing it from those problems which in the prior art are connected with the loading of the powders into the die.

An advantage of the invention is that the production capacity of the press-formers can be exploited to the maximum.

A further advantage of the invention is that important energy savings can be made with respect to the prior art.

A still further advantage derives from the fact of having production lines (especially for ceramic tiles) which are considerably shorter and therefore less massive than the traditional lines.

A still further advantage can be traced to a general simplification of the whole production process, which means that automatic control thereof becomes easier.

A still further and greatly important advantage of the present invention is that considerable ecological progress is achieved with respect to the prior art, as production slurries and waste are eliminated.

These aims and advantages and others besides are all achieved by the present invention, as it is characterised in the appended claims.

Further characteristics and advantages of the present invention will better emerge from the detailed description that follows of a preferred but non-exclusive embodiment of the invention, illustrated purely by way of a non-limiting example in the accompanying figures of the drawings, in which:

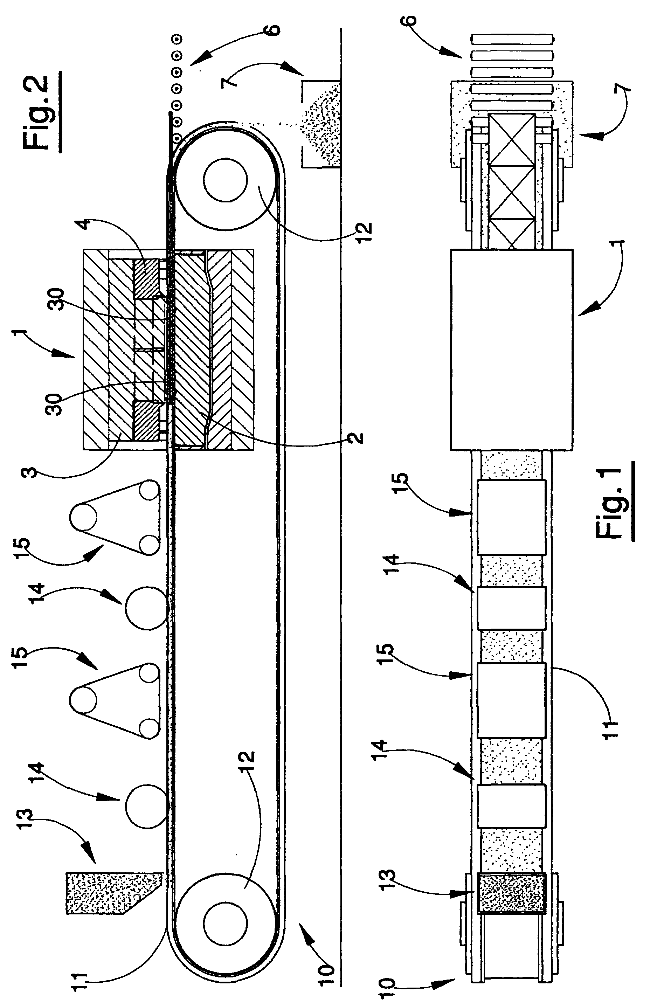

figure 1 is a schematic plan view from above of the invention;
figure 2 is a schematic section made according to line I-I of figure 1.

With reference to the figures of the drawings, 1 denotes in its entirety a press-forming device which is inserted into a continuous forming line, which is substantially constituted by a mobile transport plane for supporting both the material (powders) to be pressed and the press-formed material.

In particular, the portion of said forming line upstream of the press-forming device 1 is a continuous support for the formation and preparation of loads or layers of powders to be pressed, while the downstream portion evacuates the formed material and any non-pressed powder residues.

More specifically, the transport plane is constituted by a branch 11 of a continuous belt 10 which is ring-wound and stretched between two parallel-axis drums 12.

In the upstream portion, where the branch is horizontal, numerous load preparation stations are located one after another.

A first of these stations 13 has the task of depositing on the branch 11 a uniform layer 5 of base powders.

Some stations, for the distribution of powders in predetermined designs, use perforated rollers 14 which roll on the layer of powders deposited by the preceding stations in synchrony with the translating movements of the branch 11.

In an alternative embodiment the decorations could be made by perforated flat or curved belts as well as by the rollers 14.

Other stations in the line could be constituted by dry-decorating machines 15 for distributing coloured powders in predetermined designs on the layers of powders deposited by the preceding stations on the branch 11 operating in synchrony with the translating movements of the branch 11 itself.

The upper surface of the branch 11 can be flat or sculptured, usually with a uniformly distributed pattern. This pattern has principally the aim of creating the shape usually given to the bottom of a tile after press-forming.

In embodiments of the invention, either alternatively or in addition to the decoration systems described, rotary cylinder decorating machines could be used, which could also be used to create decorations directly on the branch 11 of the bell 10 (which would preferably be made of steel). In this case the powder would be deposited subsequently on the glazed belt and the press-forming would be carried out with the decorated side of the tile facing downwards. Obviously this would mean turning the formed tiles over as soon as they reached the end of the branch 11 of the line 10.

Downstream of the forming line, at the zone where the belt 10 begins to wind about the drum 12, the mobile plane constituted by the branch 11 is continued by a roller table 6 which has the task of continuing the transport of the formed material - in the example the unfired tiles - to send it on to subsequent work operations.

The material which has not been subject to forming and which is therefore still in the original state of incoherent powders falls, drawn by the belt 10, into an underlying collecting tray 7 and can be recycled.

The press-forming device 1 is literally crossed by the branch 11 of the mobile plane, which also has the function of being the bottom die of the device 1.

The press-forming device 1 comprises, supported on a frame 5, a lower body 2 which bears a smooth support surface 20 predisposed so that the branch 11 can run over and on it.

An upper body 3 having at least one active surface 30 (in the example there are in fact three active surfaces) is supported on the frame 5. The at least one active surface 30 faces the support surface 20.

A shaping frame 4 is predisposed in such a way as to perimetrally delimit the active surfaces 30 and to be mobile with respect to the upper body 3 so as to project inferiorly from the active surfaces 30.

The lower body 2 is mobile on command with respect to the upper body 3 in a perpendicular direction to the support surface 20 and the active surfaces 30 so that it can press down with the necessary force on the whole powder layer lying on the portion of branch 11 situated on the support surface 20, against the active surfaces 30.

The pressing action, which is done with the belt 10 stopped in exact synchrony with operations carried out at other work stations in the upstream portion of the line, first causes penetration of the edges of the shaping frame 4 into the powder layer, then to press the portions thus isolated against the respective active surfaces 30. The raising of the shaping frame 4 and the subsequent lowering thereof into the original start position of the lower body 2 free the formed material (i.e. the tiles) while leaving it on the branch 11, which, in effect, it has never left.

This evidences the fact that the upper surface of the branch 11, carrying the material, inferiorly closes the cavity of the die used for forming. The cavity is laterally delimited by the lateral internal surfaces of the shaping frame 4 and superiorly delimited by the active surfaces 30.

Obviously the belt 10 moves intermittently, with pauses alternated with rapid and measured advances.

The device 1 and the load preparation stations upstream of the device are all synchronised to operate in perfect time with the motion of the branch 11 of the belt 10.

The special structure and configuration of the plant, which strictly interconnects and correlates the press-forming device with the branch 11 of the belt 10 crossing the device 1 which, by resting on the support surface 20, functions as the bottom closure of the device 1 itself, enables tiles or other like products to be produced, at least theoretically, in shapes having any longitudinal dimension. The limits, in reality, are constituted by the longitudinal extension of the support plane 20. In practice this means that with a single pressing cycle a very much greater number of tiles can be obtained than is the case with the most powerful presses and the largest dies at present available on the market.

The plant described actuates a process for forming ceramic products, such as tiles and the like, by powder press-forming, which comprises the following phases, in operative order:
formation of loads or layers of powders on a mobile transport plane constituted by a branch 11 of a continuous belt 10, which formation is carried out in synchrony with translation movements of the branch 11 by at least one load preparation station;
press-forming of the load carried out in succession and in synchrony with the translation movements of the branch 11, in a press-forming device 1 which interacts with the branch and operates directly on the loads prepared there-upon;
transport and evacuation of the formed material and of any residue of powders present on the branch 11 after forming, in succession and in synchrony with the translation movements of the branch 11, by effect of the movements themselves;
separation of the formed material from any powder residues.

In particular, this process is characterised in that the formation of loads or layers of powders on the branch 11 is realised, in synchrony with the translation movements of the branch 11, by a plurality of load-preparing stations, operating in succession, each of which performs, in synchrony with the translation movements of the branch 11, deposition of an elementary load or layer of powders on to the layer or layers of powders already deposited by the preceding station or stations.

The formation of loads or layers of powders on the branch 11 of the continuous belt 10, which happens in synchrony with the translation movements of the branch 11, involves, in a simpler functioning form, the formation on the same branch of a continuous and uniform layer of powders.

## Claims

1. A plant for forming ceramic products such as tiles and the like, in which the powders are pressed, comprising:
a continuous forming line comprising a mobile transport plane for supporting powders to be pressed and the material formed by a pressing operation;
a press-forming device (1) which is crossed by said mobile transport plane which plane also functions as a bottom surface of the press-forming device (1);
said press-forming device (1) comprising: a lower body (2) bearing a support surface (20) predisposed in such a way that said mobile transport plane can run and rest thereon;
an upper body (3) provided with at least one active surface (30) predisposed facing said support surface (20); at least one shaping frame (4) predisposed so as to delimit perimetrally said at least one active surface (30) and so as to be mobile with respect to said upper body (3) in order to be able to project inferiorly from said at least one active surface (30); said lower body (2) and said upper body (3) being reciprocally mobile on command in a perpendicular direction with respect to the support surface (20) and to said at least one active surface (30);
wherein upstream of the press-forming device (1), a portion of said mobile transport plane functions as a support for formation and preparation of loads or layers of powders to be pressed, and a portion of said mobile transport plane line downstream of the press-forming device (1) functions as a line for transport and evacuation of press-formed material and any residues of powders.

2. The plant of claim 1, characterised in that said mobile transport plane is constituted by a branch (11) of a continuous conveyor belt (10) ring-wound and stretched between two drums (12) having parallel axes.

3. The plant of claim 2, characterised in that along the portion of forming line situated upstream of the press-forming device (1), at a point where the branch (11) is horizontal, at least one load preparation station is situated.

4. The plant of claim 3, characterised in tat along the portion of forming line located upstream of the press-forming device (1) numerous powder load preparation stations are consecutively located, at least one of which, for distribution of powders according to predetermined designs, uses a perforated roller (14) which rolls on a layer of powders (5) deposited by preceding stations in synchrony with translation movements of the branch (11).

5. The plant of claim 3, characterised in that along the portion of forming line situated upstream of the press-forming device (1), numerous load preparation stations are situated in order, at least one of which is constituted by a dry-state silk-screening machine (15) able to distribute powders according to predetermined designs on the layer of powders (5) deposited by preceding stations on the branch (11) operating in synchrony with the translation movements of the branch (11).

6. A process for forming ceramic products such as tiles and the like, by pressing powders, characterised in that it comprises the following operations in order:
formation of loads or layers of powders on a mobile transport plane constituted by a branch (11) of a continuous belt (10), which formation is carried out in synchrony with translation movements of the branch (11) by at least one load preparation station;
press-forming of the loads carried out in succession and in synchrony with the translation movements of the branch (11), in a press-forming device (1) which interacts with the branch (11) and operates directly on the loads prepared there-upon;
transport and evacuation of the formed material and of any residue of powders present on the branch (11) after forming, in succession and in synchrony with the translation movements of the branch (11), by effect of the movements themselves;
separation of the formed material from any powder residues.

7. The process of claim 6, characterised in that said formation of a load comprising layers of powders on a mobile transport plane constituted by a branch (11) of a continuous conveyor (10) is realised in synchrony with translation movements of the branch (11), by a plurality of load preparation stations operating in succession, each of which operates in synchrony with the translation movements of the branch (11) and deposits a layer of powders on top of a layer of powders already deposited by a preceding station or stations.

8. The process of claim 6 or 7, characterised in that said load formation of powders on the mobile transport plane constituted by a branch (11) of a continuous conveyor (10), realised in synchrony with translation movements of the branch (11), includes formation of a continuous and uniform powder layer on the branch (11).
